# EUROPÄISCHE PATENTSCHRIFT

(11) **EP 0 777 409 B1**
(45) Veröffentlichungstag und Bekanntmachung des Hinweises auf die Patenterteilung: **18.03.1998**
(21) Anmeldenummer: 95930444.5
(22) Anmeldetag: 08.08.1995
(51) Int. Cl.: A01D 34/73

(54) **FADENSCHNEIDER**
LINE TRIMMER
TONDEUSE A FIL

(30) Priorität: 25.08.1994 DE 4430227
(43) Veröffentlichungstag der Anmeldung: 11.06.1997
(73) Patentinhaber: WOLF-Geräte GmbH Vertriebsgesellschaft KG, D-57518 Betzdorf/Sieg (DE)
(72) Erfinder: WEID, Helmut, D-57520 Niederdreisbach (DE); ORTHEY, Gebhard, D-57583 Nauroth (DE)
(74) Vertreter: Koch, Günther, Dipl.-Ing.
(86) Internationale Anmeldenummer: EP9503144
(87) Internationale Veröffentlichungsnummer: WO9605718

(56) Entgegenhaltungen:
- EP-A- 0 056 337
- EP-A- 0 515 909
- AU-A- 6 500 080
- US-A- 4 236 311
- US-A- 4 366 622
- US-A- 4 794 695

## Beschreibung

Die Erfindung bezieht sich auf einen Fadenschneider mit einer motorisch angetriebenen Fadenspule, die in einem Spulengehäuse auswechselbar untergebracht ist, aus dem der Schneidfaden radial vorsteht und das mit einem aufschraubbaren Deckel nach unten abschließbar ist, wobei das Spulengehäuse gegenüber dem Fadenschneidergehäuse formschlüssig durch ein Verriegelungsglied gegen Drehung festlegbar ist, um das Ab- und Aufschrauben des Deckels zu erleichtern.

Ein derartiger Fadenschneider ist aus der US-A-4 794 695 bekannt. Bei diesem bekannten Fadenschneider ist das Verriegelungsglied als einarmiger Sperrhebel ausgebildet, der in einer im Inneren des Schutzgehäuses angeordneten Gabel um eine Horizontalachse in einer die Drehachse enthaltenen Ebene verschwenkbar ist und mit seinem Ende in eine Ausnehmung an der Außenseite des Spulengehäuses eingeschwenkt werden kann. Sperrhebel und Gabellager müssen dabei sehr robust ausgebildet sein, um den Kräften widerstehen zu können, die in das Lager über den relativ langen Sperrhebel eingeführt werden. In Ruhestellung ist der Sperrhebel in einen Federclip einschwenkbar, der im Inneren des Schutzgehäuses angeordnet ist. Aus diesem Federclip kann der Sperrhebel im Betrieb herausfallen und die Arbeitsweise des Gerätes beeinträchtigen. Außerdem erfordert die Sperrhebelhalterung eine lange Erstreckung des Schutzgehäuses in Richtung der Sperrhebelbewegung, was die Schutzfunktion beeinträchtigt und den Kostenaufwand gegenüber einem runden Schutzgehäuse erhöht.

Außerdem besteht bei der bekannten Vorrichtung die Gefahr, daß der Sperrhebel sich in der eingerückten Stellung verklemmt und beim Anschalten des Motors die Drehung der Fadenschneiderspule behindert.

Der Erfindung liegt daher die Aufgabe zugrunde, einen gattungsgemäßen Fadenschneider mit einer einfachen und betriebssicheren Verriegelungsvorrichtung auszurüsten, die bequem betätigbar ist und den Betrieb des Fadenschneiders nicht behindern kann.

Gelöst wird die gestellte Aufgabe durch die im Kennzeichnungsteil des Patentanspruchs 1 angegebenen Merkmale. Dadurch, daß die Verriegelungseinrichtung durch einen Druckknopf betätigbar ist und durch die Rückholfeder in seine Ausgangslage zurückkehrt, wird gewährleistet, daß ohne zusätzliche manuelle Betätigung nach Loslassen des Druckknopfes die Verriegelung gelöst wird und der Riegel die Funktion des Gerätes nicht beeinträchtigen kann.

Die EP-A-0 515 909 zeigt zwar einen Fadenschneider mit einem radial verschiebbaren, unter Federdruck stehenden Riegel, jedoch dient diese Vorrichtung nicht zur zeitweiligen Festlegung einer Fadenspule, sondern zur dauerhaften Festlegung eines Mittelgriffs in einer bestimmten Winkelstellung gegenüber dem Rohrstiel. Der Riegel wird dabei über einen Ziehgriff aus der Verriegelungsstellung innerhalb eines Loches des Rohrgriffs ausgehoben und kehrt durch die Feder in die Verriegelungsstellung zurück, sobald eine Deckung mit einem Verriegelungsloch erreicht ist.

Der Oberbegriff des Anspruchs 2 geht aus von einem Fadenschneider gemäß der US-A-4 236 311, bei dem das Spulengehäuse mit Luftschaufeln versehen ist, die als Zentrifugalgebläse wirken, um die Luft radial nach außen zu treiben, wenn sich die Fadenschneiderspule dreht. Dadurch, daß gemäß den kennzeichnenden Merkmalen des Anspruchs 2 der Riegel zwischen die Windflügel eingreift, wird eine besonders einfache und zweckmäßige Konstruktion geschaffen, weil am Spulengehäuse keine zusätzlichen Teile vorgesehen werden müssen, die in Verriegelungsstellung mit dem Riegel zusammenwirken.

Weitere zweckmäßige Konstruktionsmerkmale der Verriegelungsvorrichtung ergeben sich aus den Ansprüchen 3 und 4.

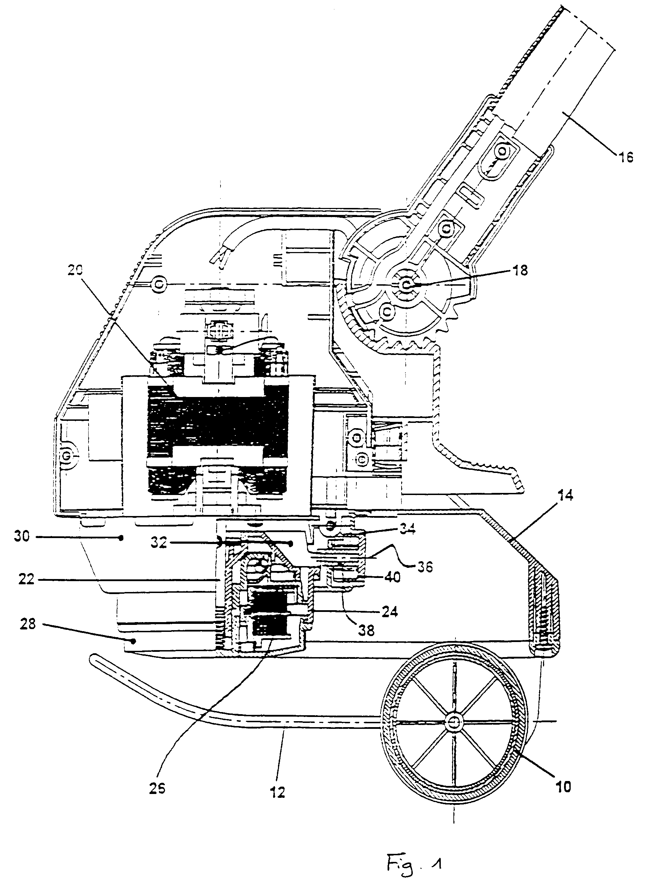

Nachstehend wird ein Ausführungsbeispiel der Erfindung anhand der Zeichnung beschrieben. Die einzige Figur der Zeichnung zeigt einen Vertikalschnitt eines erfindungsgemäß ausgebildeten Fadenschneiders.

Der Fadenschneider weist ein durch eine Laufrolle 10 und eine Kufe 12 abgestütztes Fadenschneidergehäuse 14 auf, an dem der Führungsstil 16 um eine Horizontalachse 18 schwenkbar und in verschiedenen Stellungen verriegelbar angeordnet ist. Im Gehäuse ist ein Elektromotor 20 mit vertikaler Abtriebswelle 22 angeordnet. Diese Abtriebswelle 22 trägt ein Spulengehäuse 24 mit der Fadenspule 26. Der Schneidfaden steht in radialer Richtung durch das Spulengehäuse 24 nach außen vor.

Auf ein Innengewinde des Spulengehäuses 24 ist ein Deckel 28 mit seinem Außengewinde aufgeschraubt. Ein am Fadenschneidergehäuse 14 ansetzender Schutzkragen 30 umschließt den oberen Abschnitt des rotierenden Spulengehäuses 24.

Das Spulengehäuse trägt auf der dem Deckel 28 abgewandten Seite axial und radial vorstehende, im gleichen Winkelabstand zueinander angeordnete Windflügel 32. Im Schutzkragen 30 befindet sich eine zylindrische Führung 34 für einen radial verschiebbaren Druckknopf 36, der innen konzentrisch einen in einer Bohrung geführten hohlzylindrischen Riegel 38 trägt. Der Druckknopf 36 ist durch eine Druckschraubenfeder 40 abgestützt, die den Druckknopf und den Riegel 38 in die radial äußere unwirksame Stellung überführt. Dieser Druckknopf 36 ist mit seinem Riegel 38 radial nach innen eindrückbar, wodurch der Riegel 38, wie strichliert angedeutet, in den Bereich der Windflügel 32 gelangt. Im eingedrückten Zustand wird demgemäß über die Windflügel die Fadenspule formschlüssig in Umfangsrichtung verriegelt, so daß der Deckel 28 abgeschraubt werden kann, ohne daß das Spulengehäuse zur Aufnahme der Reaktionskraft erfaßt werden müßte, wie dies bei den üblichen Fadenschneidern der Fall ist. Auf diese Weise wird ein leichtes Ab- und Aufschrauben des Deckels möglich, wenn die Fadenspule ausgewechselt werden muß oder der Schneidfaden durch die Ausnehmung des Spulengehäuses vorgeschoben werden muß.

### Bezugszeichenliste

- 10: Laufrolle
- 12: Kufe
- 14: Fadenschneidergehäuse
- 16: Führungsstiel
- 18: Horizontalachse
- 20: Elektromotor
- 22: Abtriebswelle
- 24: Spulengehäuse
- 26: Fadenspule
- 28: Deckel
- 30: Schutzkragen
- 32: Windflügel
- 34: Führung
- 36: Druckknopf
- 38: Riegel
- 40: Druckschraubenfeder

## Patentansprüche

1. Fadenschneider mit einer motorisch angetriebenen Fadenspule (26), die in einem Spulengehäuse (24) auswechselbar untergebracht ist, aus dem der Schneidfaden radial vorsteht und das mit einem aufschraubbaren Deckel (28) nach unten abschließbar ist, wobei das Spulengehäuse (24) gegenüber dem Fadenschneidergehäuse (14) formschlüssig durch ein Verriegelungsglied (38) gegen Drehung festlegbar ist, um das Ab- und Aufschrauben des Deckels (28) zu erleichtern,
dadurch gekennzeichnet, daß das Verriegelungsglied als radial geführter Riegel (38) ausgebildet ist, der über einen Druckknopf (36) gegen Federdruck (40) radial nach innen in die Verriegelungsstellung überführbar ist und nach Loslassen des Knopfes durch die Feder (40) in die Freigabestellung zurückkehrt.

2. Fadenschneider nach Anspruch 1, bei welchem das Spulengehäuse (24) an der dem Deckel (28) abgewandten Seite mit radial vorstehenden Windflügeln (32) ausgestattet ist,
dadurch gekennzeichnet, daß der Riegel (38) in Verriegelungsstellung zwischen den Windflügeln (32) eingreift.

3. Fadenschneider nach Anspruch 1 und 2,
dadurch gekennzeichnet, daß das Fadenschneidergehäuse (14) einen nach unten vorstehenden, das rotierende Spulengehäuse (24) teilweise umschließenden Schutzkragen (30) aufweist, der eine radiale Führung für den Riegel (38) und den Druckknopf (36) aufweist.

4. Fadenschneider nach einem der vorhergehenden Ansprüche,
dadurch gekennzeichnet, daß der Druckknopf (36) durch seine Feder (40) in die Ausgangsstellung vorgespannt ist und konzentrisch den hülsenförmig ausgebildeten Riegel (38) trägt.

## Claims

1. Thread cutter with a motor-driven thread bobbin (26), which is interchangeably housed in a bobbin case (24), from which the thread to be cut projects radially, and which can be locked off below with a screw-on cover (28), while the bobbin case (24) can be positively fixed against rotation, in relation to the thread cutter housing (14), by means of a locking member (38), to make it easier to screw the cover (28) off and on, distinguished by the fact that the locking member takes the form of a radially guided bolt (38), which can be conveyed, through a push-button (36), against spring pressure (40), radially inward into the locking position, and goes back into the release position through the spring (40) when the button is released.

2. Thread cutter as Claim 1, in which the bobbin case (24) is fitted with radially projecting fly regulators (32) on the side facing the cover (28), distinguished by the fact that, in the locking position, the bolt (38) engages between the fly regulators (32).

3. Thread cutter as Claims 1 and 2, distinguished by the fact that the thread cutter housing (14) has a protective collar (30) projecting downwards, partially surrounding the rotating bobbin case (24), and having a radial guide for the bolt (38) and the push-button (36).

4. Thread cutter as one of the preceding claims, distinguished by the fact that the push-button (36) is pre-loaded into the initial position by its spring (40) and carries the bolt (38), which takes the form of a sleeve, concentrically.

## Revendications

1. Tondeuse à fil comprenant une bobine de fil (26) mue par moteur et logée de façon interchangeable dans une boîte de bobine (24), d'où le fil de coupe dépasse radialement et qui peut être fermée en bas par un couvercle (28) mis en place par vissage, la boîte de bobine (24) pouvant être bloquée mécaniquement en rotation, par rapport au corps (14) de la tondeuse, par un organe de verrouillage (38) afin de faciliter le dévissage et la mise en place par vissage du couvercle (28), caractérisée en ce que l'organe de verrouillage est réalisé comme un verrou (38) guidé radialement, qui peut être amené radialement vers l'intérieur à la position de verrouillage par un bouton-poussoir (36) et à l'encontre d'une pression de ressort (40), et qui, après relâchement du bouton, retourne à la position de libération sous l'effet du ressort (40).

2. Tondeuse à fil selon la revendication 1, dans laquelle la boîte de bobine (24) est munie d'ailettes de ventilation (32), faisant saillie radialement, sur le côté éloigné du couvercle (28), caractérisée en ce que le verrou (38) s'engage entre les ailettes (32) à la position de verrouillage.

3. Tondeuse à fil selon les revendications 1 et 2, caractérisée en ce que le corps (14) de la tondeuse comporte un col de protection (30) dépassant vers le bas et entourant partiellement la boîte de bobine (24) tournante, col qui présente un guidage radial pour le verrou (38) et le bouton-poussoir (36).

4. Tondeuse à fil selon une des revendications précédentes, caractérisée en ce que le bouton-poussoir (36) est préchargé vers la position initiale par son ressort (40) et porte concentriquement le verrou (38), réalisé en forme de douille.
